# EUROPÄISCHE PATENTANMELDUNG

(11) **EP 0 828 328 A2**
(43) Veröffentlichungstag der Anmeldung: **11.03.1998**
(21) Anmeldenummer: 97114165.0
(22) Anmeldetag: 16.08.1997
(51) Int. Cl.: H02G 7/10

(54) **Verwendung eines Klebebandes mit einem Glasgewebeträger zur Befestigung eines Lichtwellenleiter-Kabels an dem Trag- oder Erdungsseil einer Hochspannungsleitung**

(30) Priorität: 07.09.1996 DE 19636480
(71) Anmelder: Beiersdorf Aktiengesellschaft, 20245 Hamburg (DE)
(72) Erfinder: Ensslin, Ludwig, 22393 Hamburg (DE); Hardt, Ulrich, 81245 München (DE)

(57) **Zusammenfassung**

Verwendung eines Klebebandes zur Befestigung eines Lichtwellenleiter-Kabels an dem Trag- oder Erdungsseil einer Hochspannungsleitung oder an ähnlichen Leitungssystemen
a) mit einem Glasgewebe als Trägerschicht, auf die
b) eine Klebebeschichtung aufgebracht ist.

## Beschreibung

Die Erfindung beschreibt die Verwendung eines Klebebandes mit einem Glasgewebe als Träger zur Befestigung eines Lichtwellenleiter-Kabels an dem Trag- oder Erdungsseil einer Hochspannungsleitung oder ähnlichen Leitungssystemen.

Schon heute ist abzusehen, daß der Aufbau eines flächendeckenden Kommunikations-Datennetzes mit Hilfe von Lichtwellenleiter-Kabeln (LWL-Kabeln) aus Glasfasern unter Verwendung der vorhandenen Infrastruktur in Form von Hochspannungsleitungen bzw. deren Masten immer größere Bedeutung erlangen wird.

Eine Möglichkeit, das vorhandene Hochspannungsleitungsnetz zum Aufbau des erwähnten Kommunikations-Datennetzes ausnutzen, besteht darin, an dem oder den zwischen den einzelnen Masten gespannten Trag- oder Erdungsseilen das LWL-Kabel zu befestigen.

Bisher sind drei verschiedene Arten der Befestigung des LWL-Kabels bekannt. Bei dem ersten Verfahren, dem sogenannten 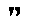 Lashed"-Verfahren wird das LWL-Kabel durch einen spiralförmig aufgebrachten Bindedraht an dem Trag- oder Erdungsseil befestigt. Dies Verfahren bietet die Vorteile, daß eine einfache Wickelmaschine den Verbund herstellen kann, ein relativ preiswertes Bindemittel, nämlich Draht, Verwendung findet, und darüber hinaus fast jede Kabel-/Seildurchmesserkombination miteinander verknüpft werden kann. Auf der anderen Seite aber fällt beim Bruch des Drahtes, der wegen der hohen mechanischen Beanspruchung nicht auszuschließen ist, durch das Aufspringen der Drahtspirale das gesamte Kabel vom Tragseil. Weiterhin kommt es bei Belastung des Drahts, zum Beispiel im Winter durch eine Schneeauflage, und infolge der unterschiedlichen Wärmeausdehnung der verknüpften Materialien zum Einschneiden des Draht in den Kabelmantel, was zu einer vollständigen Zerstörung des LWL-Kabels führen kann.

Beim 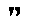 Wrapped"-Verfahren wird das im Vergleich zum Trag- oder Erdungsseil dünne LWL-Kabel spiralförmig um das Tragseil gewickelt. Auch bei diesem Verfahren kommt eine relativ einfache Wickelmaschine zum Einsatz. Darüber hinaus wird kein Bindehilfsmittel verbraucht. Diesen aufgeführten Vorteilen stehen aber gewichtige Nachteile gegenüber. Erstens können auf diese Weise nur einfache, im Durchmesser kleine und flexible LWL-Kabel gewickelt werden. Dann wandert das LWL-Kabel im Laufe der Zeit zur Spannfeldmitte, d.h., dem tiefsten Punkt des Trag- oder Erdungsseiles. Durch diese Girlandenbildung entstehen somit höhere Zugkräfte am LWL-Kabel in der Nähe des Mastes. Schließlich begrenzt die Kapazität der Spule mit dem zu verlegenden LWL-Kabel an der Wickelmaschine das Einsatzfeld des Verfahrens auf höchstens 500 Meter lange Spannfelder, und die eingeschränkte Kapazität führt dazu, daß sehr viele Spleiße zum Verbinden der einzelnen LWL-Kabelabschnitte notwendig sind.

Das dritte Verfahren ist unter dem Namen 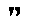 Clip or clamp"-Verfahren bekannt. Dabei wird das LWL-Kabel mittels vieler Edelstahlblechlaschen am Trag- oder Erdungsseil befestigt. Diese Möglichkeit weist nahezu keine Begrenzung der Spannfeldlänge auf. Die sichere Fixierung des LWL-Kabels schließt eine Wanderung desselben nahezu aus. Allerdings ist dies ein sehr teures und fehleranfälliges Verfahren, weil zur Verlegung eine aufwendige Maschine mit komplizierter Technik notwendig ist. Die Maschine muß vor dem Einsatz stets auf die jeweilige Kabeldurchmesserkombination abgestimmt werden. In vielen Fällen ist ein neuer Schließmechanismus mit neuen Laschenabmessungen nötig, die jeweils ein neues Stanzwerkzeug bedingen.

Demgemäß liegt der vorliegenden Erfindung die Aufgabe zugrunde, das Verfahren zur Befestigung eines LWL-Kabels an einem Trag- oder Erdungsseil einer Hochspannungsleitung oder ähnlichen Leitungssystemen so zu verbessern, daß die Nachteile des Stands der Technik nicht oder zumindest nicht in dem Umfang auftreten.

Gelöst wird diese Aufgabe durch die Verwendung von einem Klebeband, wie es in den Ansprüchen näher gekennzeichnet ist.

Das erfindungsgemäße Klebeband weist als Träger ein Glasgewebe auf, das auf einer Seite mit einer Klebebeschichtung versehen ist. Das Klebeband hat eine Dicke von 0,05 mm bis 0,5 mm, bevorzugt 0,18 mm, eine Höchstzugkraft von 300 N / cm bis 500 N / cm, bevorzugt 400 N / cm, sowie eine Reißdehnung von 3 % bis 10 %, bevorzugt 7 %.

Auf Stahl zeigt das Klebeband eine Klebkraft von 3 N/25mm bis 12 N/25mm, bevorzugt 8,5 N/25mm.
Um gewünschte Eigenschaften, insbesondere die Verringerung von Vogel- oder Wildverbiß, gezielt einzustellen, kann das Klebeband mit Repellents abgemischt sein. So kann Methyl-Anthranilat zum Einsatz kommen oder eine Kombination davon mit Vanilin. Aber auch handelsübliche Produkte zeigen eine gute Wirkung, zum Beispiel Ro-Pel® der Firma Nixalite of America INC.

In seiner bevorzugten Ausführungsform ist das Klebeband schwarz gefärbt.

Das als Trägerschicht verwendete Glasgewebe selbst besitzt folgende charakteristische Eigenschaften:
Die Glasgewebe weist eine Dicke von 0,03 mm bis 0,45 mm, bevorzugt 0,13 mm, und ein Gewicht von 100 g/m² bis 150 g/m², bevorzugt 130 g/m², auf.

Als Klebemasse ist insbesondere eine solche auf Silikonkautschukbasis verarbeitet, die durch eine hohe Alterungsbeständigkeit gekennzeichnet ist. Darüber hinaus ist sie vorteilhafterweise wärmehärtend.

In einer weiteren bevorzugten Ausführungsform des Klebebandes ist in die Klebebeschichtung eine Verstärkung eingearbeitet. Diese Verstärkung wird vorteilhafterweise von zumindest einem Faden gebildet. Der Faden kann aus Nylon oder Kevlar bestehen und weist dabei die folgenden physikalischen Parameter auf:
- - Feinheit des Garnes: : 100 dtex bis 500 dtex,
insbesondere 150 dtex bis 250 dtex
- - Bruchkraft: : 30 N bis 60 N,
insbesondere von 45 N

Alternativ ist aber auch die Verwendung eines metallischen Drahtes als Verstärkung möglich.

Zur Befestigung des LWL-Kabels am Trag- oder Erdungsseil wird das Klebeband bevorzugt in einer einfachen Umwicklung und/oder einer doppelten, gegenläufigen Umwicklung um das LWL-Kabel und das dazu parallel liegende Trag- oder Erdungsseil einer Hochspannungsleitung geführt.

Das erfindungsgemäße Klebeband mit einem Glasgewebe als Trägermaterial, insbesondere in seiner bevorzugten Ausführungsform mit einer alterungsbeständigen Selbstklebemasse auf Silikonkautschukbasis, übertrifft die herkömmlichen Befestigungsmittel bezüglich der Anforderungen an Haltbarkeit, Reißfestigkeit, Schmiegsamkeit, Resistenz gegen Umwelteinflüsse und Temperaturbelastbarkeit. Der Glasgewebeträger ist darüber hinaus gemäß UL 510 auch sehr schwer entflammbar.

Neben den qualitativen Vorzügen zeichnet sich das erfindungsgemäße Klebeband auch durch eine sehr gute Verarbeitbarkeit aus, insbesondere wegen der konstant hohen Flexibilität der Klebemasse auch bei unterschiedlichen Temperaturen.

Das Klebeband ist zur sicheren Befestigung eines LWL-Kabels an dem Trag- oder Erdungsseil einer Hochspannungsleitung demnach hervorragend geeignet. An das Befestigungsmittel werden nämlich eine Vielzahl von Anforderungen gestellt, die es zu erfüllen gilt, und die vom offenbarten Klebeband erfüllt werden:
- eine hohe Haltbarkeit, die eine lange Lebensdauer gewährleistet
- eine hohe Reißfestigkeit, um die mechanischen Beanspruchungen hervorgerufen durch die Witterung (beispielsweise Schneelast oder Wärmeausdehnung unter Sonneneinstrahlung) aushalten zu können; so ergibt sich unter Eislast eine zusätzliche Belastung von bis zu 7 kg / m Kabel
- hohe Widerstandskraft gegen UV-Einstrahlung
- eine hohe Flexibilität, um eine sichere Verbindung zwischen LWL-Kabel und Trag- oder Erdungsseil herzustellen
- eine hohe Säurefestigkeit
- eine große Resistenz gegenüber Pilzbefall, Bakterien oder Insekten
- eine hohe Temperaturbelastbarkeit gekoppelt mit einer schweren Entflammbarkeit, zum Beispiel bei einem Blitzeinschlag
- eine leichte und zuverlässige Verarbeitbarkeit im Temperaturbereich von ungefähr - 30 °C bis 70 °C während des Wickelprozesses
- eine leichte und zuverlässige Verarbeitbarkeit auch bei hoher Feuchtigkeit während des Wickelprozesses

Auch führt eine eventuelle partielle Zerstörung des Klebebandes nicht zu einem Ausfall des Verbundes, d.h., einer Trennung des LWL-Kabels vom Trag- oder Erdungsseil, wie dies bei einem Reißen des Bindedrahts beim 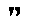 Lashed"-Verfahren auftritt, weil nur direkt am Ort des Klebebandrisses der Halt des LWL-Kabels am Trag- oder Erdungsseil nicht mehr gewährleistet ist. Das nicht zerstörte Klebeband stellt ansonsten die uneingeschränkte Fixierung des LWL-Kabels am Trag- oder Erdungsseil sicher.

Eine besonders hohe Festigkeit und Haltbarkeit des Klebebandes selbst sowie eine sehr sichere Stabilität des Verbundes aus LWL-Kabel/Trag- oder Erdungsseil, der von dem erfindungsgemäßen Klebeband umwickelt ist, lassen sich erzielen, wenn in die Klebebeschichtung des Klebebands eine Verstärkung, beispielsweise in Form eines Kevlar- oder Nylonfadens oder eines metallischen Drahtes eingearbeitet ist. Selbst wenn das Klebeband durch Überbeanspruchung streckenweise einreißt oder gar durchreißt, stellt die jeweilige Verstärkung stets die Verbindung sicher, d.h., ein Ablösen des LWL-Kabels vom Trag- oder Erdungsseil ist bei Verwendung dieser besonders vorteilhatten Ausführungsform des Klebebandes ausgeschlossen.

Die zur Aufbringung des Klebebandes auf LWL-Kabel und Trag- oder Erdungsseil notwendige Wickelmaschine weist einen einfachen Aufbau auf, was Voraussetzung für eine große Zuverlässigkeit derselben ist. Weiterhin ermöglicht eine derartige Maschine, daß fast jede Kabel-/Seildurchmesserkombination miteinander verbunden werden kann. Ein weiterer Vorteil dieser Maschine besteht darin, daß sie sehr einfach zu bedienen ist.

Das Klebeband kann damit auch problemlos über Schweißstellen am Trag- oder Erdungsseil beziehungsweise über Spleißstellen am LWL-Kabel geführt werden.

Zur Befestigung des LWL-Kabels am Trag- oder Erdungsseil mit Hilfe des erfindungsgemäßen Klebebandes werden hauptsächlich zwei Verfahren angewandt, zum einen die einfache Umwicklung des LWL-Kabels und des dazu parallel liegenden Trag- oder Erdungsseils mit dem Klebeband, zum anderen das Kreuzwickelverfahren, das eine doppelte, gegenläufige Umwicklung des LWL-Kabels und des Trag- oder Erdungsseils darstellt. Es ist aber die gleichzeitige Anwendung beider Verfahren zur Befestigung des LWL-Kabels möglich. Insbesondere letzteres zeichnet sich durch eine besonders sichere Fixierung des LWL-Kabels aus, so daß eine unerwünschte Wanderung desselben zweifelsfrei unterbunden wird.

Die einfache Umwicklung des Klebebands um LWL-Kabel und Trag- oder Erdungsseil ist mit Hilfe einer besonders einfach konstruierten Maschine möglich, bietet aber eine geringere Sicherheit der Verbindung als das bevorzugte zweite Verfahren.
Bei der doppelten, gegenläufigen Umwicklung ergeben sich Kreuzungspunkte, in denen zwei Schichten Klebeband übereinander kleben, was sehr hohe Verklebungskräfte bewirkt. Damit sind eindeutig definierte Verklebungsstellen festgelegt, weil in diesen Punkten nicht mit Verschmutzung, Feuchtigkeit oder Öl- und Fettrückständen gerechnet werden muß. Darüber hinaus bietet die doppelte Umschlingung höchste mechanische Sicherheit selbst bei extremen Beanspruchungen.

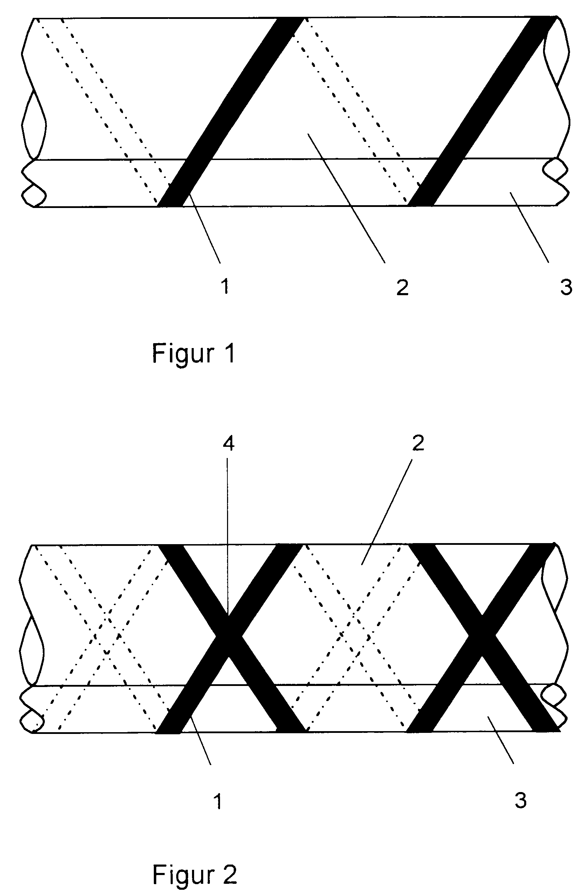

In den Figuren 1 und 2 sind die beiden Verfahren zur Umwicklung des LWL-Kabels und des Trag- oder Erdungsseiles mit dem Klebeband dargestellt.
In der Figur 1 ist das erfindungsgemäße Klebeband (1) in einer einfachen Umwicklung um das Trag- oder Erdungsseil (2) und das LWL-Kabel (3) geführt.
Bei der doppelten, gegenläufigen Umwicklung in der Figur 2 hingegen ergeben sich Kreuzungspunkte (4) mit dem Klebeband (1), in denen zwei Schichten Klebeband (1) übereinander kleben und die somit eine besonders sichere Verbindung des LWL-Kabels (3) mit dem Trag- oder Erdungsseil (2) garantieren.

Im folgenden soll die Erfindung anhand eines Beispiel näher beschrieben werden, ohne damit die Erfindung unnötig einschränken zu wollen.

### Beispiel

Die Herstellung des Produktes ist in zwei Hauptabschnitte unterteilt:
1. Die Herstellung des klebenden Trägers für den Verstärkungsfaden durch Beschichtung eines Glasgewebes und Schneiden zu Mutterrollen
2. Das Schneiden der Mutterrollen zu Bändern von Fertigmaßbreite unter Zukaschierung des Verstärkungsfadens und Aufrollen der Bänder zu einsatzfertigen Spulen

Ausgangsmaterial ist ein Glasgewebe (Burlington Style 1165 Glass Cloth) gemäß BGF-Industries Standards. Aus diesem Gewebe wird der klebende Träger für den Verstärkungsfaden in einem zweistufigen Beschichtungsprozess hergestellt.

In der ersten Stufe wird Glasgewebe mit einer Acrylatmasse beschichtet, um für die spätere Kleberbeschichtung eine geschlossene Bahn zu erzeugen. Die Acrylatmasse ist schwarz eingefärbt und verleiht dadurch dem Produkt die gewünschte Farbe.

Hierzu wird das zu einem Ballen aufgerollte Glasgewebe von der Abrolleinrichtung der Beschichtungsanlage mittels angetriebener Walzen abgezogen und der Beschichtungsstation (Auftragswerk) zugeführt. Dabei wird durch Bahnspannung und Umlenkwalzen dafür gesorgt, daß eventuell vorhandene Falten ausgezogen werden.

Das Auftragwerk besteht aus einer rotierenden Gummiwalze, über die die Glasgewebebahn gezogen wird, und einem darüber angebrachten Streichmesser, das die Aufgabe hat, die vor dem Streichmesser kontinuierlich auf die Bahn geförderte Acrylatmasse zu einer Schicht von der gewünschten Dicke (23 g/m²)zu verteilen.

Hinter dem Auftragwerk durchläuft die Bahn einen Heißluft-Trockenkanal, in dem die Acrylatmasse getrocknet und ausgehärtet wird.

Danach wird die Bahn an einer Aufrollstation erneut zu einem Ballen aufgerollt.

In der zweiten Stufe des ersten Fertigungsabschnittes werden die Klebemasse und die Rückseitenlackierung aufgebracht.

Hierzu wird der in der ersten Stufe des Fertigungsabschnittes hergestellte Ballen in die Abrollstation der Beschichtungsanlage gebracht und die Bahn von dort und inline durch Lack-Auftragwerk, Lacktrockner, Klebemasse-Auftragwerk und Klebemasse-Trockner gefahren. Am Ende der Beschichtungsanlage wird die Bahn wieder zu einem Ballen aufgerollt.

Bei dem Lack handelt es sich um einen Carbamat-Lack, der die Aufgabe hat, eine definierte Abrollkraft des Klebebandes von der Spule zu gewährleisten. Er wird auf die schwarze Acrylatmasse aufgetragen.

Die Klebemasse ist eine wärmehärtende Silikon-Masse. Sie wird auf die der Lackseite entgegengesetzte Seite aufgetragen. Beim anschließenden Trocknerdurchlauf erfolgt nach Verdampfung des Lösemittels eine thermische Härtung der Klebemasse, auf der deren Wärmebeständigkeit beruht.

Für die Weiterverarbeitung des Produktes im zweiten Hauptabschnitt wird das fertig beschichtete Produkt erneut umgerollt und dabei zu Mutterrollen mit einer Lauflänge von 400 m und einer Breite von 200 mm aufgeschnitten.

Die im ersten Hauptabschnitt der Fertigung hergestellten Mutterrollen werden in einer Schneidmaschine (SAF) zu 6 mm breiten Bändern aufgeschnitten und zu Spulen aufgerollt. Zugleich wird dabei der Verstärkungsfaden zukaschiert.

Die Bahn wird hierzu von der Mutterrolle in der Abrollstation der SAF-Schneidmaschine abgezogen und in die Schneidstation geführt. Dort wird sie 6 mm breite Bänder aufgeschnitten, die jeweils getrennten Aufwickelstationen zulaufen.

Vor der Schneidstation befindet sich die Einrichtung für das Zukaschieren der Verstärkungsfäden. Diese laufen durch ein Leitgitter in Laufrichtung der Bahn zu und werden auf der mit Klebemasse beschichteten Seite auf die Bahn aufgelegt. Der Abstand und die Position der Fäden ist durch das Leitgitter so festgelegt, daß sie nach dem Schneiden mittig auf dem 6 mm breiten Klebeband verlaufen. Die Verankerung der Verstärkungsfäden in der Klebemasse erfolgt durch den Druck zwischen den Wickellagen der Spulen nach dem Aufwickeln.

Das Zukaschieren des Verstärkungsfadens wird für jedes Band einzeln vorgenommen. Die Mutterrolle wird zunächst aufgeschnitten. Danach werden die fertigen Spulen nochmals umgerollt, wobei dann der Verstärkungsfaden mittels Positionier- und Andrückvorrichtung zukaschiert wird.

Das auf Langrollen konfektionierte Klebeband wird von einem um das LWL-Kabel beziehungsweise um das Trag- oder Erdungsseil rotierenden Schlitten aufgebracht. Das Klebeband klebt sofort sowohl auf dem LWL-Kabel als auch auf dem Trag- oder Erdungsseil und stellt somit eine dauerhafte Verbindung sicher.

## Patentansprüche

1. Verwendung eines Klebebandes zur Befestigung eines Lichtwellenleiter-Kabels an dem Trag- oder Erdungsseil einer Hochspannungsleitung oder an ähnlichen Leitungssystemen
a) mit einem Glasgewebe als Trägerschicht, auf die
b) eine Klebebeschichtung aufgebracht ist.

2. Verwendung eines Klebebandes nach Anspruch 1, dadurch gekennzeichnet, daß das Klebeband
eine Dicke von 0,05 mm bis 0,5 mm, bevorzugt 0,18 mm,
eine Höchstrugkraft von 300 N / cm bis 500 N / cm, bevorzugt 400 N / cm,
eine Reißdehnung von 3 % bis 10 %, bevorzugt 7 %,
aufweist.

3. Verwendung eines Klebebandes nach Anspruch 1, dadurch gekennzeichnet, daß das Klebeband eine Klebkraft auf Stahl von 3 N/25mm bis 12 N/25mm, bevorzugt 8,5 N/25mm, aufweist.

4. Verwendung eines Klebebandes nach Anspruch 1, dadurch gekennzeichnet, daß das Klebeband mit Repellents abgemischt ist.

5. Verwendung eines Klebebandes nach Anspruch 1, dadurch gekennzeichnet, daß das Klebeband die Farbe schwarz aufweist.

6. Verwendung eines Klebebandes nach Anspruch 1, dadurch gekennzeichnet, daß das als Trägerschicht verwendete Glasgewebe
eine Dicke von 0,03 mm bis 0,45 mm, bevorzugt 0,13 mm,
ein Gewicht von 100 g/m² bis 150 g/m², bevorzugt 130 g/m²,
aufweist.

7. Verwendung eines Klebebandes nach Anspruch 1, dadurch gekennzeichnet, daß die Klebemasse eine alterungsbeständige, wärmehärtende Klebemasse auf Silikonkautschukbasis ist.

8. Verwendung eines Klebebandes nach Anspruch 1, dadurch gekennzeichnet, daß in die Klebebeschichtung eine Verstärkung eingearbeitet ist.

9. Verwendung eines Klebebandes nach Anspruch 8, dadurch gekennzeichnet, daß die Verstärkung in Form von zumindest einem Faden ausgebildet ist.

10. Verwendung eines Klebebandes nach Anspruch 9, dadurch gekennzeichnet, daß der Faden aus Nylon oder Kevlar ist.

11. Verwendung eines Klebebandes nach den Ansprüchen 9 und 10, dadurch gekennzeichnet, daß
die Feinheit des Garnes 100 dtex bis 500 dtex, insbesondere von 150 dtex bis 250 dtex, beträgt und daß
der Faden eine Bruchkraft von 30 N bis 60 N, insbesondere von 45 N, aufweist.

12. Verwendung eines Klebebandes nach Anspruch 8, dadurch gekennzeichnet, daß die Verstärkung von zumindest einem metallischen Draht gebildet ist.

13. Verwendung eines Klebebandes nach Anspruch 1, dadurch gekennzeichnet, daß zur Befestigung des Lichtwellenleiter-Kabels das Klebeband in einer einfachen Umwicklung und/oder einer doppelten, gegenläufigen Umwicklung um das Lichtwellenleiter-Kabel und das parallel dazu liegende Trag- oder Erdungsseil einer Hochspannungsleitung geführt wird.
